# FASCICULE DE BREVET EUROPEEN

(11) **EP 2 635 849 B1**
(45) Date de publication et mention de la délivrance du brevet: **27.01.2016**
(21) Numéro de dépôt: 11785752.4
(22) Date de dépôt: 26.10.2011
(51) Int. Cl.: F24C 7/08, F24C 15/10, G02B 6/00

(54) **ARTICLE VITROCERAMIQUE LUMINEUX**
GLASKERAMIK MIT BELEUCHTUNG
ILLUMINATED VITRO-CERAMIC

(30) Priorité: 04.11.2010 FR 1059082
(43) Date de publication de la demande: 11.09.2013
(73) Titulaire: Eurokera S.N.C., 02400 Château-Thierry (FR)
(72) Inventeur: GUISET, Pierrick, F-91300 Massy (FR); LALUET, Jean-Yves, F-75019 Paris (FR); MALLET, Claire, F-75003 Paris (FR)
(74) Mandataire: Goldenberg, Virginie Isabelle
(86) Numéro de dépôt international: PCT/FR2011/052491
(87) Numéro de publication internationale: WO 2012/059664

(56) Documents cités:
- EP-A1- 1 505 414
- EP-A2- 0 438 656
- US-A- 5 013 893
- US-A1- 2003 210 537

## Description

La présente invention concerne un article (ou produit) en vitrocéramique, notamment une plaque vitrocéramique, destiné(e) en particulier à couvrir ou recevoir des éléments de chauffage, ledit article étant pourvu d'un moyen d'éclairage avantageux permettant d'éclairer au moins une zone choisie de l'article.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité et/ou puisse lire le cas échéant les afficheurs ; elle doit également présenter une transmission élevée dans les longueurs d'onde du domaine de l'infrarouge dans le cas notamment des plaques à foyers radiants.

Les principales plaques actuelles sont de couleur sombre, en particulier noires, mais il existe également des plaques d'aspect plus clair (en particulier blanches, présentant par exemple un flou d'au moins 50% comme décrit dans le brevet FR2766816), voire des plaques transparentes munies de revêtements opacifiants (émail, peinture) et/ou réfléchissants. (couches réfléchissantes déposées par magnétron ou incorporant des pigments à effets).

Jusqu'à présent, les effets lumineux observés sur les vitrocéramiques ont été principalement causés parles systèmes de chauffage en état de marche et/ou créés ponctuellement au niveau des afficheurs, comme décrit par exemple dans le document US2003/0210537 (le document US 2003/021537 décrit un Article selon le préambule de la revendication 1), mais il n'a pas été mis au point de solution spécifique pour l'éclairage ciblé, fonctionnel et/ou esthétique (identification de certaines zones telles que les zones de chauffe, création de logos lumineux, etc.) d'autres zones, notamment plus étendues, indépendamment de l'état de marche des zones de chauffe, en particulier pour les plaques de couleur sombre, les plus répandues, mais de transmission lumineuse plus limitée.

En outre, si la matérialisation des zones de chauffe a pu se faire par le passé par le biais des résistances de chauffe dans le cas des plaques à foyers radiants, ceci n'est plus possible dans le cas des plaques à chauffage par induction dans lesquelles il n'y a pas de résistance de chauffe, la zone de chauffe étant dans ce cas jusqu'à présent matérialisée par sérigraphie.

Le but de la présente invention a été de fournir de nouveaux articles vitrocéramiques (tels que des plaques) améliorés, en particulier de mettre au point de nouveaux articles vitrocéramiques présentant un éclairage permettant notamment le balisage actif d'une ou de plusieurs zones de chauffe mais pouvant également convenir à la mise en lumière fonctionnelle et/ou décorative (motifs, logos) d'autres zones, ceci quel que soit le mode de chauffage utilisé pour l'article, et quelle que soit la couleur de la zone à éclairer, l'invention convenant en particulier aux plaques de couleur sombre et/ou très absorbantes.

Ce but est atteint par le nouvel article selon l'invention, présentant au moins une zone d'éclairage (ou zone destinée à être éclairée), ledit article comprenant au moins un substrat vitrocéramique (en particulier une plaque, destinée par exemple à couvrir ou recevoir au moins un élément chauffant), et, en plus du substrat, au moins un guide optique, ce guide étant couplé à au moins une source lumineuse sur un côté hors de la zone d'éclairage, et (ledit article) comprenant dans la zone d'éclairage, au moins un moyen d'extraction du rayonnement émis par la source, caractérisé en ce que le guide optique comprend au moins une ouverture dans au moins une zone d'éclairage, en particulier une ouverture tronconique, notamment lorsque ladite zone est destinée à entourer et signaler la zone de chauffe.

Avantageusement, le substrat et le guide sont de même forme (plans tous les deux par exemple ou suivant la ou les mêmes courbures le cas échéant) et orientés dans la même direction (parallèles par exemple dans le cas d'éléments plans, comme dans une structure multicouche). Ils peuvent être au contact l'un de l'autre ou non (par exemple séparés, notamment équidistants, de quelques millimètres ou centimètres, une lame d'air entre le substrat et le guide pouvant notamment isoler thermiquement et mécaniquement le guide du substrat) et sont, dans un mode de réalisation avantageux, attenants ou au contact, formant ainsi une structure compacte, ou encore séparés par une lame d'air.

De préférence, l'article selon l'invention est formé (comme substrat) d'une plaque vitrocéramique, plane ou majoritairement (pour l'essentiel de sa surface) plane (en particulier avec une flèche inférieure à 0,1% de la diagonale de la plaque, et de préférence de l'ordre de zéro), et est destiné à servir de plaque de cuisson, et le guide optique est également plan. On peut qualifier dans ce cas l'article selon l'invention de « module de cuisson plan ».

Par la suite, dans le présent texte, on pourra par extension également qualifier l'article selon l'invention d'article « vitrocéramique » car cet article est avant tout à base et à destinations vitrocéramiques, étant en particulier basé sur une structure ou substrat vitrocéramique que l'on a amélioré notamment en rapportant le guide optique tel que précité, et étant destiné aux applications spécifiques des vitrocéramiques (plaques de cuisson, etc.).

Par articles (en) vitrocéramiques, on entend non seulement les articles réalisés en vitrocéramique proprement dite mais également les articles en tout autre matériau analogue à la vitrocéramique (par exemple une table à gaz avec un substrat à base d'un matériau analogue à la vitrocéramique), en particulier ce matériau analogue résistant à haute température et présentant notamment un coefficient de dilatation nul ou quasi-nul (par exemple, dans le cas des plaques vitrocéramiques utilisées avec des feux radiants, inférieur à 15.10⁻⁷ K⁻¹). De préférence cependant, il s'agit d'un article en vitrocéramique proprement dite.

Comme indiqué précédemment, le substrat vitrocéramique considéré dans la présente invention est de préférence une plaque, présentant une face principale (de plus grandes dimensions) destinée à être la face supérieure (face visible) en position d'utilisation, une autre face principale destinée à être la face inférieure (souvent cachée, dans le châssis ou caisson par exemple d'une cuisinière) en position d'utilisation, et une tranche (ou chant ou épaisseur). La face supérieure est généralement plane et lisse mais la plaque peut aussi comprendre au moins une zone en relief et/ou au moins une zone en creux et/ou au moins une ouverture (par exemple si la plaque incorpore une ouverture destinée à recevoir un brûleur à gaz atmosphérique). Parallèlement, la plaque peut présenter une face inférieure lisse ou munie de picots augmentant sa résistance mécanique et obtenus par exemple par laminage. Dans un mode de réalisation préféré, la plaque présente une face inférieure lisse pour une meilleure combinaison avec le guide optique.

De préférence également, en particulier lorsque le substrat vitrocéramique est une plaque, le guide optique est également une plaque, dotée d'une tranche et de deux faces principales, et est rapporté (il est généralement assemblé après avoir été conçu séparément) avantageusement sur la face inférieure (en position d'utilisation) du substrat précité. Un guide plan est particulièrement avantageux, un tel guide étant simple, efficace et pouvant desservir (par exemple avec des ouvertures et/ou traitements appropriés, comme explicité ultérieurement) plusieurs zones d'éclairage, quelle que soit leur taille (en particulier des zones de chauffe de petit diamètre), leur position, etc.

Le guide peut être parallélépipédique, avec des faces principales rectangulaires ou de toute autre forme (la forme pouvant dépendre de la ou des zones d'éclairage souhaitées), lesdites faces pouvant présenter les mêmes dimensions que les faces principales du substrat (le guide couvre généralement une partie d'une face du substrat) ou des dimensions différentes, en particulier une ou des dimensions (longueur, largeur) plus petites (légèrement ou non, le guide pouvant ne couvrir qu'une petite portion de la face du substrat) et/ou une ou des dimensions légèrement plus grandes (par exemple il peut déborder d'un côté du substrat, en particulier par l'un de ses côtés porteur de source(s) lumineuse(s) afin que celle(s)-ci soient déportées des zones de chauffe ou de la totalité du substrat vitrocéramique). De préférence, le guide présente une ou des dimensions (en particulier périphériques) inférieures ou égales à celles de la plaque.

Même si l'utilisation d'un guide multiple (avec lame d'air ou de gaz) ou feuilleté incorporant plusieurs couches minérales et/ou organiques, n'est pas exclue, le guide est avantageusement monolithique pour gagner notamment en simplicité, compacité et légèreté. Il peut être avantageusement de plus petite épaisseur que le substrat vitrocéramique (généralement 3 ou 4 mm pour une plaque vitrocéramique de cuisson) et peut être très mince ; il est par exemple d'au moins 2 mm et est préférentiellement inférieur à 6 mm (pour des raisons de poids et de compacité notamment).

Le guide peut être organique et/ou plastique (par exemple en polycarbonate ou polyméthacrylate de méthyle PMMA), ou minéral, et est de préférence minéral; en particulier, il s'agit d'un verre (organique ou minéral, de préférence minéral). Ce verre peut éventuellement avoir subi un traitement chimique ou thermique du type durcissement, recuit ou trempe. De préférence, le guide optique est une plaque de verre (de dimensions extérieures ou périphériques inférieures ou égales à celles du substrat). Il n'est pas exclu non plus d'utiliser comme guide une vitrocéramique, en particulier claire.

Le guide est avantageusement clair ou transparent. De préférence, le facteur de transmission autour du pic du rayonnement est supérieur ou égal à 50%, encore plus préférentiellement supérieur ou égal à 70%. Il s'agit de préférence d'un verre silico-sodo-calcique, clair (en particulier de transmission lumineuse T_{L} supérieure ou égale à 90 %) ou extraclair (en particulier de transmission lumineuse T_{L} supérieure ou égale à 91,5%), ou d'un borosilicate, etc. Il n'est pas exclu cependant d'utiliser un verre plus sombre ou faiblement teinté dans la masse, ou une vitrocéramique claire/faiblement opaque, par exemple la vitrocéramique KeraLite de la société Eurokera.

Ainsi, l'article selon l'invention peut être à base de toute vitrocéramique quelle que soit sa couleur, claire ou sombre, transparente (telle que les plaques commercialisées sous le nom KeraLite par les sociétés Eurokéra et Kéraglass) ou translucide, et peut en particulier et avantageusement, être à base d'une vitrocéramique d'aspect noir, à transmission lumineuse faible, inférieure à 5% (telle que les plaques commercialisées sous le nom Kérablack par la société Eurokéra) et/ou présenter (l'article ou le substrat) une opacité telle qu'elle permet par exemple le masquage d'éléments sous-jacents, l'aspect sombre du substrat vitrocéramique n'empêchant pas la création ciblée d'une ou plusieurs zones lumineuses (zones d'éclairage) par l'intermédiaire notamment du guide optique combiné extérieur audit substrat.

L'article selon l'invention peut ainsi présenter une ou plusieurs zones lumineuses à usage fonctionnel et/ou décoratif (dessin, logo, signalisation alphanumérique, etc), zones généralement observées en faces principales (notamment la face supérieure) du substrat vitrocéramique et dans l'épaisseur dudit substrat: La ou les zones lumineuses peuvent être dans toute zone de la plaque (y compris zones de chauffe), de même que l'on peut avoir plusieurs zones lumineuses (ou d'éclairage) différenciées (couleur, niveau de luminance, et/ou chaque zone peut elle même présenter différentes couleurs, par exemple une zone peut être sous forme d'un cercle bicolore entourant une zone de chauffe, selon les zones d'éclairage, les découpes du ou des guides, les moyens d'extraction, etc..), et/ou avec des fonctions distinctes (éclairage, décor, signalétique..). Dans le cas d'une plaque vitrocéramique formant la structure (le substrat) de l'article et destinée à couvrir ou recevoir au moins un élément de chauffage, l'article peut présenter avantageusement une ou plusieurs zones éclairantes (ou d'éclairage) permettant la détection des éléments de chauffage lorsqu'ils sont en service ou encore chauds, notamment une ou plusieurs zones circulaires ou géométriques entourant chacune une zone à l'aplomb d'une source de chauffage.

Dans un mode de réalisation particulièrement préféré, le guide optique est sous forme de plaque, et présente conformément à l'invention au moins une ouverture dans au moins une zone d'éclairage, notamment lorsque ladite zone est destinée à entourer et signaler la zone de chauffe.

On note à ce propos que, dans la présente invention, par « dans une/la zone d'éclairage », on entend une zone de l'article, en particulier une zone du guide ou éventuellement du substrat (selon ce qui est considéré), se trouvant à l'aplomb (en dessous en position d'utilisation) de la zone d'éclairage prévue sur le substrat (observée en face supérieure) et de dimensions sensiblement identiques. Par « hors de la zone d'éclairage », on entend une zone en dehors de la zone précédente, en particulier éloignée de la zone précédente (éloignée de la zone à l'aplomb de la zone d'éclairage sur le substrat vitrocéramique).

Chaque ouverture présente dans le guide optique (destinée à se trouver) à l'aplomb d'une zone de chauffe présente plusieurs avantages : elle peut notamment permettre l'intégration habituelle des éléments de chauffage, en particulier lorsqu'il s'agit d'éléments de chauffage nécessitant d'être placés près des zones du substrat vitrocéramique devant être chauffées (le diamètre de l'ouverture étant alors supérieur ou égal, de préférence supérieur au diamètre extérieur de l'élément de chauffe). En outre cette ouverture influe également sur la zone d'éclairage prévue le cas échéant pour signaler la zone de chauffe, notamment par le choix de ces bords (inclinés ou non ou arrondis) et par leur texturation ou revêtement éventuels (les bords de l'ouverture constituant le cas échéant des moyens d'extraction du rayonnement mentionnés dans la définition de l'invention), tels que émail, dépoli par sablage ou acide, inclinaison, etc. Les bords d'une ou des ouvertures peuvent être droits ou arrondis mais de préférence ils sont biseautés (en particulier chanfreinés) ou inclinés, en particulier à environ 45°, de façon à permettre une meilleure extraction de la lumière (des rayonnements), acheminée par le guide optique, vers la ou les zones d'éclairage et/ou pour rediriger les rayonnements vers une zone (ou moyen) d'extraction. Ainsi le guide présente de préférence une ou des ouvertures tronconiques.

Chaque ouverture peut également être rendue réfléchissante, par exemple grâce à un ruban adhésif métallique ou une couche métallique ou une couche miroir ou un dépôt d'argent, etc. pour assurer une réflexion optimale du rayonnement guidé. La couche métallique ou miroir peut notamment être déposéee/présente en face du guide opposée au substrat vitrocéramique (face inférieure pour un module de cuisson plan) sur au moins une partie du bord du guide entourant la ou les ouvertures concernées pour renforcer l'extraction de la lumière vers le substrat.

A noter que l'article selon l'invention peut également comprendre plusieurs guides dédiés chacun à une ou plusieurs zones d'éclairage, néanmoins un guide unitaire, pourvu d'ouverture(s) comme précité, est avantageux, ce guide permettant notamment une fabrication et un assemblage plus facile.

Le guide optique est généralement solidarisé au substrat par collage et/ou clipsage, mais peut également être assemblé par encapsulation, etc. Comme déjà évoqué, il se situe en dehors du substrat, et permet ainsi, entre autres, de mieux conduire la lumière jusqu'aux zones d'éclairage voulues, en particulier lorsque le substrat est de couleur sombre, comme c'est souvent le cas pour les vitrocéramiques.

Dans un mode de réalisation alternatif à l'assemblage du guide directement sur le substrat, le guide optique peut être couplé en fonctionnement au substrat vitrocéramique mais solidarisé à une autre partie de l'article ou d'un support sur lequel est monté l'article, par exemple dans le cas d'un module ou appareil de cuisson, solidarisé au caisson de l'appareil de cuisson sur lequel le substrat vitrocéramique est monté (le caisson pouvant le cas échéant faire partie de l'article).

L'article selon l'invention comprend également au moins une source lumineuse couplée au guide (rattachée au guide et coopérant avec ledit guide en émettant en son sein son rayonnement lumineux afin que le guide le transmette) pour une propagation de la lumière (en particulier par réflexion totale interne ou par réflexion métallique) à l'intérieur du guide (dans l'épaisseur), notamment couplée par un bord de la tranche du guide ou par un bord de l'une des faces principales (notamment logée dans une cavité, une rainure, un profilé...), hors de la zone d'éclairage comme précisé selon l'invention, la ou les sources lumineuses émettant/étant couplées de préférence par la tranche ou chant du guide.

Le fait que les sources lumineuses, couplées avec le(s) guide(s), soient éloignées de la ou des zones d'éclairage, notamment lorsque celles-ci servent à signaler des zones de chauffe, permet notamment d'éviter la dégradation des sources par la chaleur des éléments de chauffage couplés à la plaque, de ne pas avoir de problèmes d'encombrement du fait de l'occupation nécessaire d'une partie de la surface inférieure par d'autres éléments (éléments de chauffage) coopérant avec la plaque, de multiplier les zones d'éclairage (en fonction de la forme du/des guides) sans multiplier les sources et permet de pouvoir masquer les sources (par exemple, si elles sont déportées en périphérie de l'article, par l'application d'une couche d'émail opaque en périphérie du substrat).

On peut avoir plusieurs sources (leur nombre et leur disposition pouvant varier pour homogénéiser l'éclairage) et/ou la source lumineuse peut être continue ou discontinue ; elle est de préférence formée par des diodes, généralement alignées (diodes électroluminescentes ou DEL ou LED en anglais), plus ou moins espacées, et/ou éventuellement par une ou des fibres optiques, avec injection de lumière par extraction latérale de la fibre, le long du bord d'injection (de préférence la tranche) du guide. Les diodes sont particulièrement avantageuses dans la présente invention en terme notamment d'encombrement, d'efficacité, de pérennité et résistance aux conditions environnantes (chaleur...).

La source de type diode peut être encapsutée, c'est-à-dire comprendre une puce semi-conductrice et une enveloppe, par exemple en résine type époxy ou nylon, encapsulant la puce.

La diode peut être aussi une puce semi-conductrice sans lentille de collimation par exemple de taille de l'ordre de la centaine de µm ou du mm ; et éventuellement avec une encapsulation minime par exemple de protection.

Les diodes peuvent être portées par un support ou barette ou embase, cette embase pouvant aussi présenter une surface traitée (plane ou inclinée) et/ou rendue réfléchissante autour du groupe de diodes pour une efficacité lumineuse encore meilleure, par exemple revêtue d'une laque ou peinture et/ou couche miroir, et/ou d'un réflecteur blanc ou métallique pour mieux diriger le rayonnement émis dans le guide.

L'assemblage de la ou des sources (au guide notamment) peut se faire par clipsage, collage, etc, notamment par l'intermédiaire d'un élément ; par exemple dans le cas des diodes, on peut monter les diodes, soudées sur un support lui même logé au fond d'un profilé métallique, par clipsage ou collage du profilé sur la tranche du guide.

Les sources (et leur alimentation et actionnement) peuvent être dissociées ou non de façon à permettre selon les besoins un éclairage simultané ou séparé des zones d'éclairage voulues.

L'article selon l'invention comprend également, dans la zone d'éclairage, au moins un moyen d'extraction du rayonnement émis par la ou les sources.

Le moyen d'extraction peut être notamment un ou des éléments ou traitement(s) diffusants. Par exemple, l'extraction peut être réalisée par une couche rapportée sur la surface et/ou tout traitement ou texturation différentielle de la surface (local ou sur toute la surface), notamment du guide, comme la gravure laser, l'impression d'émail, l'attaque chimique (acide..) ou mécanique (sablage...), etc. formant un réseau d'éléments continus ou discontinus diffusants. L'avantage d'une distribution discrète d'éléments peut être d'obtenir un guide transparent (par exemple avec des éléments diffusants entre 0,03 mm² et 0,2mm²) lorsque la source lumineuse est éteinte, ne venant pas perturber la vision au travers de l'article selon l'invention quand il est au repos (chauffage et éclairage éteints) et/ou d'homogénéiser l'éclairage. La densité des moyens diffusants peut être en particulier ajustée de façon à homogénéiser l'éclairage des zones choisies.

Un élément diffusant peut être présent en surface (du guide notamment), ou une surface d'extraction peut également être prévue dans l'épaisseur du guide suivant par exemple une technologie de gravure interne par laser. Le ou les moyens d'extraction permettent d'extraire les rayonnements du guide vers la zone d'éclairage voulue.

Dans un mode de réalisation, le guide comprend au moins une couche extractrice ou surface d'extraction (de la lumière issue de la source) sur l'une de ses faces principales (notamment inférieure ou opposée au substrat vitrocéramique), ou éventuellement dans son épaisseur, cette couche ou surface étant formée d'une distribution variable d'élément(s) diffusant(s), pour une sortie d'au moins une partie de la lumière par sa face principale tournée vers le substrat (face supérieure du guide pour un module plan de cuisson).

La géométrie et la rugosité du bord de l'ouverture du guide selon l'invention peuvent également être avantageusement travaillés pour permettre une extraction locale et contrôlée de la lumière, comme déjà évoqué.

La surface d'extraction peut être de toute forme géométrique ou non, peut être en une ou plusieurs parties, et peut former une zone géométrique, un dessin, une signalétique (flèche, lettre....), des motifs, identiques ou distincts, sur une partie du substrat (zone d'éclairage) dans une direction approximativement perpendiculaire à l'axe de source et/ou à l'axe principal du guide. Le ou les moyens d'extraction peuvent être localisé(s) (biseau vu dans le cas de l'ouverture, et/ou texturation locale, telle qu'un sablage de la surface) ou non (texturation de toute une face du guide par exemple), et peuvent être combinés le cas échéant avec un autre traitement permettant de cibler les zones d'éclairage, par exemple avec une sérigraphie occultante (masquant certaines zones et empêchant le passage de la lumière) sur le substrat, comme explicité et illustré ultérieurement.

Le ou les éléments diffusants peuvent fonctionner en réflexion et/ou en transmission. En réflexion, il(s) dispose(nt) d'un coefficient de réflexion lumineuse (R_{L}) supérieur à 50%, notamment supérieur à 70% et de préférence supérieur à 90%, l'extraction lumineuse se faisant normalement en direction de la face opposée à celle comprenant l'élément diffusant. En transmission, il(s) dispose(nt) d'un coefficient de transmission lumineuse (T_{L}) supérieur à 50%, notamment supérieur à 70% et de préférence supérieure à 90%, l'extraction lumineuse se faisant normalement depuis la face comprenant l'élément diffusant.

A titre d'exemples non limitatifs, dans le cas où le moyen d'extraction situé sur le guide est un émail blanc par exemple, il se trouve de préférence sur la face inférieure du guide (ou face opposée au substrat vitrocéramique), l'extraction étant supérieure du côté non sérigraphié (l'extraction se faisant alors principalement vers le substrat et non par exemple vers le caisson sur lequel est monté l'article dans le cas d'un module de cuisson). Dans le cas d'un autre traitement de type sablage utilisé comme moyen d'extraction sur le guide, la face traitée peut être cette fois l'une et/ou l'autre face.

L'article selon l'invention peut comporter le cas échéant d'autres éléments et/ou couches. Par exemple, lorsqu'il s'agit d'un module de cuisson, l'article peut être muni de (ou associée avec des) élément(s) fonctionnel(s) ou de décor supplémentaire(s) (cadre, connecteurs), câble(s), élément(s) de commande, afficheur(s), par exemple à diodes électroluminescentes dits « à 7 segments » ou à cristaux liquides, bandeau de commande électronique à touches sensitives et affichage digital, etc.). Il peut comporter divers revêtements fonctionnels et/ou décoratifs, à base d'émail, de peinture, etc, en dehors le cas échéant des revêtements spécifiquement destinés à l'extraction. Par exemple, l'une des faces du substrat peut comporter une couche d'émail de décoration, de masquage (pour éviter par exemple la vision directe des sources), ou d'autre fonction (homogénéisation de l'éclairage, etc.). Le guide optique peut également comporter divers revêtements, par exemple peut être métallisé, pour éviter par exemple dans un module de cuisson que des fuites de lumière n'éclairent le fond du caisson (la métallisation pouvant se faire avant ou après façonnage du bord intérieur des ouvertures présentes le cas échéant, sur l'une ou l'autre des faces du guide).

L'invention concerne aussi les appareils (ou dispositifs) de cuisson et/ou de maintien à haute température comportant au moins un article selon l'invention (par exemple cuisinières, tables de cuisson encastrables, fours, etc) et comportant, le cas échéant, un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction L'article selon l'invention peut également consister en un appareil de cuisson comportant un ou plusieurs éléments chauffants outre les éléments précités dans la définition de l'invention. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction). En outre, l'invention n'est pas limitée à la fabrication de plaques ou modules de cuisson pour cuisinières ou tables de cuisson. Les articles fabriqués conformément à l'invention peuvent régalement être d'autres modules plans ou plaques devant présenter une grande insensibilité aux variations de température.

L'article selon l'invention est ainsi un article lumineux (présentant une ou des zones d'éclairage ou destinées à être éclairées), présentant une bonne tenue thermique et est compatible avec l'utilisation de divers types de chauffages (par induction, radiant, halogène, gaz...), quelle que soit la taille des éléments de chauffage utilisés, résiste à la rayure, à l'abrasion et aux chocs thermiques, présente une bonne résistance au vieillissement, offre l'opacité communément recherchée et la résistance aux différentes contraintes mécaniques exigées dans les applications vitrocéramiques, et est totalement compatible avec les lignes de production existantes. Il est simple à fabriquer et à mettre en oeuvre, préserve les sources lumineuses des hautes températures pouvant affecter leur rendement et leur durée de vie, présente des zones d'éclairage ciblées et homogènes, le système permettant en outre un balisage actif (état on/off, couleurs ou intensité ajustées à la température, jeux de lumière, etc.) et localisé de zones de chauffe le cas échéant, et garde un encombrement restreint lorsqu'il s'agit d'un module de cuisson plan.

La présente invention concerne également un procédé de fabrication d'un article selon l'invention, dans lequel on céramise le verre précurseur (ou verre-mère ou green glass) pour obtenir le substrat vitrocéramique, puis on rapporte le guide optique, en particulier on l'assemble au substrat vitrocéramique.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé «vitrocéramique» dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

D'autres détails et caractéristiques avantageuses ressortiront ci-après de la description de modes de réalisation de l'invention en référence aux dessins annexés dans lesquels :
- La figure 1 représente schématiquement une vue en coupe d'un article présentant au moins deux zones d'éclairage.
- La figure 2 représente schématiquement une vue en coupe d'un article selon l'invention présentant au moins une zone d'éclairage circulaire délimitant une zone de chauffe.
- La figure 3 représente schématiquement une vue de dessus d'un article selon l'invention avec l'éclairage en fonctionnement.
- La figure 4 représente schématiquement une vue de dessus d'un article selon l'invention avec différents guides optiques possibles.
- La figure 5 représente schématiquement une vue en coupe d'un article avec un moyen d'extraction local.
- La figure 6 représente schématiquement une vue en coupe d'un article selon l'invention muni de différentes couches et/ou traitements dont un servant à l'extraction de la lumière.
- La figure 7 représente schématiquement une vue en coupe d'un autre article muni de différentes couches et/ou traitements dont un servant à l'extraction de la lumière.

Dans les figures, les mêmes références désignent les mêmes parties des articles.

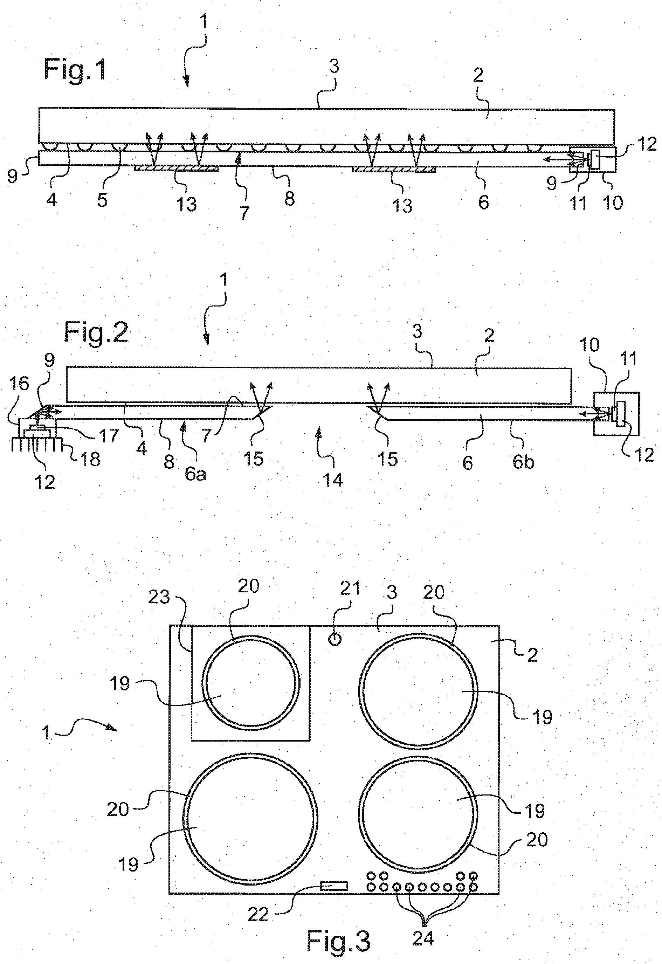

Dans la figure 1, l'article 1 est un module de cuisson plan comprenant une plaque vitrocéramique 2 (substrat) présentant une face supérieure 3 lisse et une face inférieure 4 munie de picots 5 (cette face pouvant également avantageusement être sans picots), et comprend également un guide optique 6 rapporté sous le substrat, ce guide se présentant sous forme d'une plaque de verre clair borosilicate de 3 ou 6 mm d'épaisseur, ce guide présentant une face supérieure 7, une face inférieure 8, et une tranche 9, ce guide étant couplé à une source lumineuse 10 (ne dépassant pas de la plaque 2 pour former un module compact) formée d'une pluralité de LEDs 11 portées par une embase logée dans un profilé 12, les LED émettant un rayonnement dans le guide comme indiqué par les flèches, ladite source se trouvant sur une partie de la tranche du guide hors des zones d'éclairage et des zones de chauffe, l'article comprenant en outre un moyen d'extraction du rayonnement émis par la source, ce moyen se présentant sous forme d'au moins deux zones émaillées ou sablées 13 situées chacune sous chacune des zones d'éclairage voulues (non représentées, apparaissant en fonctionnement en face supérieure du substrat, à l'aplomb des zones d'extraction, comme indiqué par les flèches).

Dans la figure 2, l'article (dont le substrat présente cette fois une face inférieure dénuée de picots) comprend cette fois, pour l'extraction du rayonnement et selon la présente invention, une ouverture 14, par exemple de 170 mm de diamètre, dans le guide optique 6 au niveau d'un élément de chauffage sous jacent (non représenté), qui peut venir se loger dans ladite ouverture sous la plaque vitrocéramique, les bords 15 de l'ouverture étant biseautés/chanfreinés à 45° et étant dépolis, le biseau (chanfrein) et le dépoli constituant le moyen d'extraction de la lumière, l'angle du biseau étant optimisé de façon à maximiser la quantité de lumière extraite et le dépoli permettant d'uniformiser la répartition de lumière, la lumière étant ainsi redirigée (comme indiqué par les flèches) vers une zone d'éclairage choisie (non représentée, apparaissant en fonctionnement en face supérieure du substrat, autour de la zone de chauffe, similairement à ce que est représenté en figure 3). Alternativement à l'ouverture au sein du guide d'onde unitaire, on peut aussi utiliser plusieurs guides optiques (6a, 6b) plans laissant apparaitre une ou des zones non couvertes (ouvertures) et produisant la ou les mêmes zones d'éclairage, au moins une autre source lumineuse 16 (formée d'une pluralité de LEDs 17 portées par une embase logée dans un profilé 12) pouvant être dans ce cas couplée à un autre guide d'onde (cette autre source étant facultative dans le premier cas où le guide d'onde est unitaire).

Dans le mode représenté en figure 2, la première source 10 est représentée cette fois (en variante de la figure 1) dépassant de la plaque 2, et la seconde source 16, en variante des deux précédentes positions de sources, est représentée déportée de l'axe principal du guide. Ce mode est notamment utile pour éclairer une plaque vitrocéramique possédant une faible transparence lorsque l'on utilise des LEDs de forte puissance, la puissance électrique alimentant l'ensemble du circuit générant un échauffement important qu'il est nécessaire de dissiper efficacement pour éviter l'endommagement du système électrique. Les éléments radiatifs efficaces étant généralement volumineux, cette solution permet de déporter l'injection de lumière de façon à pouvoir positionner des éléments radiatifs 18 à l'arrière des LEDs.

Dans le mode de réalisation de la figure 3, l'article présente 4 zones de chauffe 19 sous lesquelles se trouvent 4 éléments de chauffage (non apparents par le dessus), le guide optique étant alors pourvu de 4 ouvertures sur le modèle illustré en figure 2, quatre zones d'éclairage 20 pouvant ainsi apparaitre, indépendamment (dans le cas notamment de plusieurs guides optiques), ou simultanément (dans le cas notamment d'un guide optique avec plusieurs ouvertures) lorsque la ou les sources lumineuses sont activées. D'autres zones décoratives ou fonctionnelles (logos 21, inscriptions 22, signalisations 23, touches de commande ou indicateurs 24) peuvent également être prévues ou signalées, par exemple par émail (par exemple motif 23) ou en prévoyant d'autres zones d'éclairage (cadre lumineux en périphérie de la plaque, illumination d'un logo, etc.) à l'aide d'ouvertures dans le guide comme pour les zones 20 (la géométrie de perçage du guide pouvant être adaptée pour permettre également l'intégration d'éléments en contact avec la plaque vitrocéramique) et/ou à l'aide d'autres moyens d'extraction (comme les moyens 13 de la figure 1).

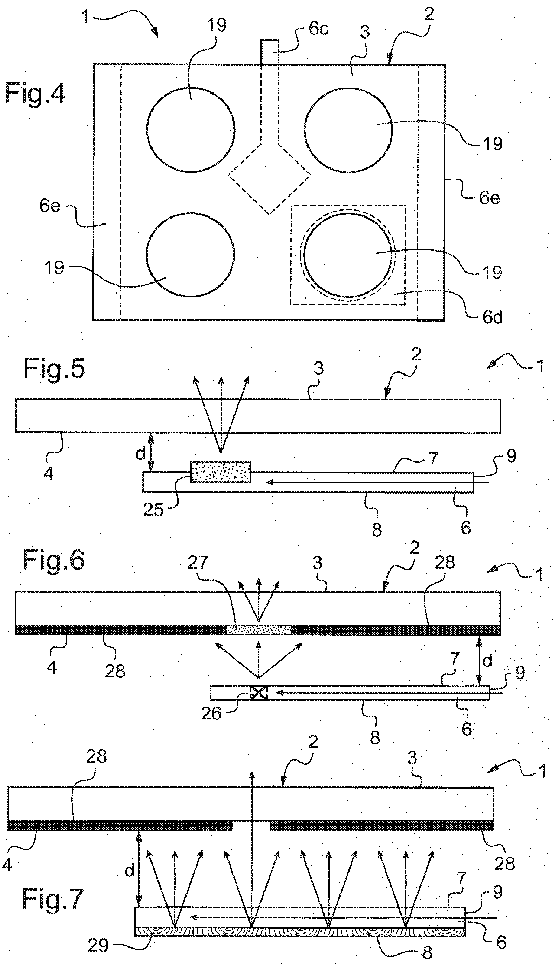

Dans le mode de réalisation de la figure 4, l'article selon l'invention comprend l'une et/ou l'autre formes de guides optiques représentées (en pointillés car sur la face inférieure de l'article) selon le type (de zones) d'éclairage(s) recherché(s) ; alternativement il peut comprendre comme guide optique une seule plaque de verre rectangulaire de même forme et/ou dimensions extérieures que le substrat vitrocéramique (et comportant une ou plusieurs ouvertures intérieures, en particulier tronconiques et/ou biseautées comme en figure 2). Le ou les guides optiques peuvent être combinés à des revêtements occultants ou moyens de masquage (comme illustré en figures 6 et 7) afin de donner des zones d'éclairage aux formes bien particulières telles que des logos, etc. En figure 4, on peut utiliser par exemple un guide optique 6c de forme allongée et changeant de section (s'élargissant à son extrémité) pour l'éclairage spécifique d'un logo central (en combinaison par exemple avec d'autres moyens délimitant les contours du logos), et/ou un guide optique 6d rectangulaire à ouverture centrale (du même genre que celui représenté en figure 2) pour l'éclairage d'une zone de chauffe 19, et/ou deux guides optiques 6e allongé à section constante sur une partie seulement de la longueur de la plaque vitrocéramique, pour l'éclairage par exemple des bords de la plaque.

Dans la figure 5, le ou les moyens d'extraction utilisés (par exemple avec les guides 6e de la figure 4) peuvent être localisé(s), par exemple il peut s'agir d'un sablage local 25 de la surface (le cheminement de la lumière étant indiqué par les flèches). On remarque également dans ce mode de réalisation que le guide n'est pas au contact du substrat mais à une distance d de celui-ci, ce guide pouvant malgré tout être solidaire du substrat (fixé au substrat et apte à être déplacé avec lui) ou couplé avec lui mais solidaire du support (caisson par exemple- non représenté) sur lequel l'article est destiné à être monté.

Dans le mode de réalisation de la figure 6, le ou les moyens d'extraction utilisés (par exemple avec les guides 6c et 6d de la figure 4) peuvent être localisés, par exemple il peut s'agir de biseau(x) 26 de la ou des ouvertures, de sablage local ou sérigraphie locale sur le guide, ou ce ou ces moyens additionnels peuvent être non localisés (par exemple sablage total ou sérigraphie totale de la surface du guide), ces moyens étant combinés en figure 6 avec éventuellement d'autres moyens 27 d'extraction ou diffusants, en particulier sur le substrat, tels qu'une sérigraphie diffusante, et/ou avec des moyens occultants (masquant certaines zones et empêchant le passage de la lumière) 28, en particulier sur le substrat, tels qu'une sérigraphie occultante, pour permettre de former des zones d'éclairage aux contours particuliers (le cheminement de la lumière étant indiqué par les flèches). Comme précédemment dans ce mode, le guide n'est pas au contact du substrat mais à une distance d de celui-ci.

Dans la figure 7, outre les moyens occultants 28, en face inférieure du substrat, on utilise également un revêtement 29, par exemple par sérigraphie, en face inférieure du guide, pour diriger plus de lumière vers le substrat (par exemple revêtement réfléchissant), le cheminement de la lumière étant indiqué par les flèches).

Les articles, tels que des plaques vitrocéramiques, selon l'invention peuvent notamment être utilisés avec avantages pour réaliser une nouvelle gamme de plaques de cuisson pour cuisinières ou tables de cuisson, mais peuvent également être utilisés avec avantages pour réaliser des éléments de paroi ou des parois (par exemple des portes ou partie de portes) de fours, etc

## Revendications

1. Article (1) présentant au moins une zone d'éclairage, ledit article comprenant au moins un substrat vitrocéramique (2), et, en plus du substrat, au moins un guide optique (6, 6a, 6b, 6c, 6d, 6e), ce guide étant couplé à au moins une source lumineuse (10, 11, 16, 17) sur un côté hors de la zone d'éclairage, et comprenant dans la zone d'éclairage, au moins un moyen d'extraction (13, 25, 26) du rayonnement émis par la source, **caractérisé en ce que** le guide optique comprend au moins une ouverture (14) dans au moins une zone d'éclairage (20), en particulier une ouverture tronconique, notamment lorsque ladite zone est destinée à entourer et signaler la zone de chauffe (19).

2. Article selon la revendication 1, **caractérisé en ce que** le substrat (2) est une plaque vitrocéramique et **en ce que** le guide optique (6, 6a, 6b, 6c, 6d, 6e) est une plaque de verre.

3. Article selon l'une des revendications 1 ou 2, **caractérisé en ce que** la zone d'éclairage (20) est destinée à entourer et signaler au moins une zone de chauffe (19).

4. Article selon l'une des revendications 1 à 3, **caractérisé en ce que** la source lumineuse (10, 11, 16, 17) est formée de diodes électroluminescentes (11, 17).

5. Article selon l'une des revendications 1 à 4, **caractérisé en ce que** l'ouverture (14) présente un ou des bords (15) biseautés, en particulier chanfreinés, et/ou la géométrie et la rugosité du ou des bords de l'ouverture sont travaillées pour permettre une extraction locale et contrôlée de la lumière.

6. Article selon l'une des revendication 1 à 5, **caractérisé en ce que** le guide optique (6, 6a, 6b, 6c, 6d, 6e) comporte sur au moins une partie de sa surface, une zone rugueuse (13, 25), notamment par sablage et/ou émaillage, pour permettre une extraction locale et contrôlée de la lumière.

7. Article selon l'une des revendications 1 à 6, **caractérisé en ce que** le ou les moyens d'extraction (13, 25, 26) sont localisé(s) ou non, notamment sur toute une face, et/ou sont combinés avec un autre traitement permettant de cibler les zones d'éclairage, en particulier avec au moins un moyen de masquage ou revêtement occultant (28) tel qu'une sérigraphie occultante sur le substrat.

8. Article selon l'une des revendications 1 à 7, **caractérisé en ce que** le guide (6, 6a, 6b, 6c, 6d, 6e) est solidaire du substrat (2), ou est couplé avec lui mais solidarisé à une autre partie de l'article ou destiné à être solidarisé au support sur lequel l'article est destiné à être monté.

9. Article selon l'une des revendications 1 à 8, ou dispositif de cuisson et/ou de maintien à haute température comportant un article (1) selon l'une des revendications 1 à 8, et comportant un ou plusieurs éléments de chauffage.

## Patentansprüche

1. Artikel (1) mit mindestens einer Beleuchtungszone, wobei der Artikel mindestens ein glaskeramisches Substrat (2) und, zusätzlich zu dem Substrat, mindestens eine optische Führung (6, 6a, 6b, 6c, 6d, 6e) umfasst, wobei die Führung mit mindestens einer Lichtquelle (10, 11, 16, 17) auf einer Seite außerhalb der Beleuchtungszone gekoppelt ist, und in der Beleuchtungszone mindestens eine Einrichtung (13, 25, 26) zum Extrahieren der von der Quelle emittierten Strahlung umfasst, **dadurch gekennzeichnet, dass** die optische Führung mindestens eine Öffnung (14) in der mindestens einen Beleuchtungszone (20), insbesondere eine kegelstumpfförmige Öffnung, umfasst, insbesondere, wenn die Zone dazu bestimmt ist, die Heizzone (19) zu umgeben und anzuzeigen.

2. Artikel nach Anspruch 1, **dadurch gekennzeichnet, dass** das Substrat (2) eine Glaskeramikplatte ist und dass die optische Führung (6, 6a, 6b, 6c, 6d, 6e) eine Glasplatte ist.

3. Artikel nach einem der Ansprüche 1 oder 2, **dadurch gekennzeichnet, dass** die Beleuchtungszone (20) dazu bestimmt ist, eine Heizzone (19) zu umgeben und anzuzeigen.

4. Artikel nach einem der Ansprüche 1 bis 3, **dadurch gekennzeichnet, dass** die Lichtquelle (10, 11, 16, 17) von Leuchtdioden (11, 17) gebildet ist.

5. Artikel nach einem der Ansprüche 1 bis 4, **dadurch gekennzeichnet, dass** die Öffnung (14) einen oder mehrere abgeschrägte, insbesondere abgefaste, Ränder (15) aufweist und/oder die Geometrie und die Rauigkeit des oder der Ränder der Öffnung bearbeitet sind, um eine lokale und kontrollierte Extraktion des Lichts zu ermöglichen.

6. Artikel nach einem der Ansprüche 1 bis 5, **dadurch gekennzeichnet, dass** die optische Führung (6, 6a, 6b, 6c, 6d, 6e) auf mindestens einem Teil ihrer Oberfläche eine, insbesondere durch Sandstrahlen und/oder Emaillieren, geraute Zone (13, 25) aufweist, um eine lokale und kontrollierte Extraktion des Lichts zu ermöglichen.

7. Artikel nach einem der Ansprüche 1 bis 6, **dadurch gekennzeichnet, dass** die Extraktionseinrichtung(en) (13, 25, 26) sich insbesondere auf einer gesamten Fläche befindet/befinden oder nicht und/oder mit einer anderen Behandlung kombiniert ist/sind, die es ermöglicht, die Beleuchtungszonen anzuvisieren, insbesondere mit mindestens einer Einrichtung zum Maskieren oder abdunkelnden Beschichtung (28), wie ein abdunkelnder Siebdruck auf dem Substrat.

8. Artikel nach einem der Ansprüche 1 bis 7, **dadurch gekennzeichnet, dass** die Führung (6, 6a, 6b, 6c, 6d, 6e) mit dem Substrat (2) fest verbunden ist oder mit ihm gekoppelt ist, jedoch mit einem anderen Teil des Artikels verbunden ist oder dazu bestimmt ist, mit dem Träger, auf dem der Artikel montiert werden soll, fest verbunden zu werden.

9. Artikel nach einem der Ansprüche 1 bis 8, oder Vorrichtung zum Kochen und/oder zum Heißhalten, die einen Artikel (1) nach einem der Ansprüche 1 bis 8 und ein oder mehrere Heizelemente umfasst.

## Claims

1. Article having at least one lighting zone, said article comprising at least one glass-ceramic substrate, and, in addition to the substrate, at least one light guide, this guide being coupled to at least one light source on one side outside of the lighting zone, and comprising, in the lighting zone, at least one means of extracting the radiation emitted by the source, **characterized in that** the light guide comprises at least one aperture in at least one lighting zone, in particular a frustoconical aperture, especially when said zone is intended to surround and indicate the heating zone.

2. The article as claimed in claim 1, **characterized in that** the substrate is a glass-ceramic plate and **in that** the light guide is a glass plate.

3. The article as claimed in either one of claims 1 and 2, **characterized in that** the lighting zone is intended to surround and indicate at least one heating zone.

4. The article as claimed in one of claims 1 to 3, **characterized in that** the light source is formed of light-emitting diodes.

5. The article as claimed in one of claims 1 to 4, **characterized in that** the aperture has one or more beveled, in particular chamfered, edges and/or the geometry and the roughness of the one or more edges of the aperture are processed to enable local and controlled extraction of the light.

6. The article as claimed in one of claims 1 to 5, **characterized in that** the light guide comprises, over at least part of its surface, a rough zone, especially by sandblasting and/or enamelling, so as to enable local and controlled extraction of the light.

7. The article as claimed in one of claims 1 to 6, **characterized in that** the one or more extracting means may or may not be localized, especially to all of one face, and/or are combined with another treatment that makes it possible to target the lighting zones, in particular with at least one masking means or concealing coating means such as a concealing layer screen-printed onto the substrate.

8. The article as claimed in one of claims 1 to 7, **characterized in that** the guide is connected to the substrate, or is coupled to it but connected to another part of the article or intended to be connected to the support on which the article is intended to be mounted.

9. The article as claimed in one of claims 1 to 8, or a cooking device and/or a device for maintaining a high temperature, comprising an article as claimed in one of claims 1 to 8, and comprising one or more heating elements.
